**Europäisches Patentamt**

**European Patent Office**

**Office européen des brevets**

(19)

(11) **EP 1 477 832 A1**

(12) **EUROPEAN PATENT APPLICATION**

(43) Date of publication:
   **17.11.2004 Bulletin 2004/47**

(51) Int Cl.⁷: **G02B 6/42**

(21) Application number: **04010169.3**

(22) Date of filing: **29.04.2004**

| | |
|---|---|
| (84) Designated Contracting States:<br>**AT BE BG CH CY CZ DE DK EE ES FI FR GB GR HU IE IT LI LU MC NL PL PT RO SE SI SK TR**<br>Designated Extension States:<br>**AL HR LT LV MK**<br><br>(30) Priority: **14.05.2003 JP 2003135635**<br><br>(71) Applicant: **SEIKO EPSON CORPORATION**<br>**Shinjuku-ku, Tokyo 163-0811 (JP)** | (72) Inventor: **Miyamae, Akira**<br>**Suwa-shi, Nagano-ken 392-8502 (JP)**<br><br>(74) Representative: **Hoffmann, Eckart, Dipl.-Ing.**<br>**Patentanwalt,**<br>**Bahnhofstrasse 103**<br>**82166 Gräfelfing (DE)** |

(54) **Optical module comprising an optoelectronic component mounted in a hole of a substrate**

(57)  An optical module (1), detachably coupled to a connector (2) provided at one end face of an optical fiber (3), comprises: a substrate (10) having a first through hole (11); a transparent layer (15) arranged so as to cover the first hole (11) on one surface side of the substrate (10); and an optical element (13) that is arranged inside the first hole (11) and on the transparent layer (15) and carries out transmission or reception of light signals to/ from the optical fiber (3) through the transparent layer (15).

**Fig. 1a**

EP 1 477 832 A1

**Fig. 1b**

**Description**

The present invention relates to an optical module suitable for an optical transmission system; the invention also relates to a manufacturing method of the optical module.

In an optical transmission system, two optical elements, namely a light emitting element, which converts electrical signals into light signals, and a light receiving element, which converts light signals into electrical signals, are typically coupled through an optical fiber. In order to make such optical element and the optical fiber detachable, an optical module is used for optically coupling the optical element and the optical fiber. Such an optical module is described in the document JP 14-250846 A.

The conventional optical module comprises an optical element on one surface side of a substrate and an optical fiber on the other surface side of the substrate, hence, the distance between the optical element and the optical fiber depends on the thickness of the substrate. To increase optical coupling efficiency between the optical element and the optical fiber, the distance between them should be as short as possible. However, there is a limit in reducing the thickness of the substrate without sacrificing its mechanical strength. Moreover, if the substrate is too thin deformation such as bending of the substrate is likely to occur. This in turn, tends to lower the degree of preciseness of the relative position between the optical element and the optical fiber.

The optical module described in the above mentioned document JP 14-250846 A has an opening in a substrate and light signals transmitted between the optical element and the optical fiber pass through the opening. Therefore, it is difficult to protect the light emitting surface or the light receiving surface of the optical element, arranged inside the opening. Although this prior art provides protecting the light emitting surface or the light receiving surface by transparent resin, the optical element as a whole is not protected.

Thus, an object of the present invention is to provide an optical module that allows a high optical coupling efficiency between an optical element and an optical fiber independent of the thickness of a substrate. Another object of the present invention is to provide an optical module offering a high degree of protection of the light emitting surface or the light receiving surface of the optical element.

These objects are achieved by an optical module as claimed in claim 1, a method of manufacturing it as claimed in claim 18 and their preferred embodiments according to the dependent claims.

The distance between the optical element and the optical fiber is not dependent on the thickness of the substrate; this is achieved by a structure in which the optical element is arranged in the space provided by the first hole, and the optical element is supported by the transparent layer that is arranged so as to cover the first hole. Accordingly, the optical coupling efficiency can be increased without being dependent on the thickness of the substrate. Moreover, because the transparent layer is interposed between the optical element and the optical fiber, the protection of the light emitting surface or the light receiving surface of the optical element will be increased easily.

The term "transparent layer" as used in this text means a layer of transparence (or translucence) that allows light signals to pass therethrough, and any transparent (translucent) material can be employed as long as it has a moderate mechanical strength sufficient for supporting the optical element. However, a resin layer (transparent resin layer) such as polyimide and epoxy resin that allows light to pass therethrough can be preferably used.

Preferably, the first hole is formed so as to penetrate the substrate. Accordingly, mounting the optical element and other processings (for example, sealing the periphery of the optical element) can be carried out from the open end of the first hole, which is not covered with the transparent layer, when manufacturing the optical module, and this is convenient for the manufacturing process. Moreover, because the top surface (the surface side, which is not in contact with the transparent layer) of the space that accommodates the optical element is open, measures to promote heat dissipation of the optical element can be easily taken.

Hereinafter, preferred embodiments of the present invention will be described in detail with reference to the accompanying drawings, in which:

FIG. 1   illustrates the structure of an optical module according to a first embodiment;

FIG. 2   illustrates various steps of a method of manufacturing the optical module according to the first embodiment;

FIG. 3   illustrates the structure of an optical module according to a second embodiment; and

FIG. 4   illustrates the structure of an optical module according to a third embodiment.

**First embodiment**

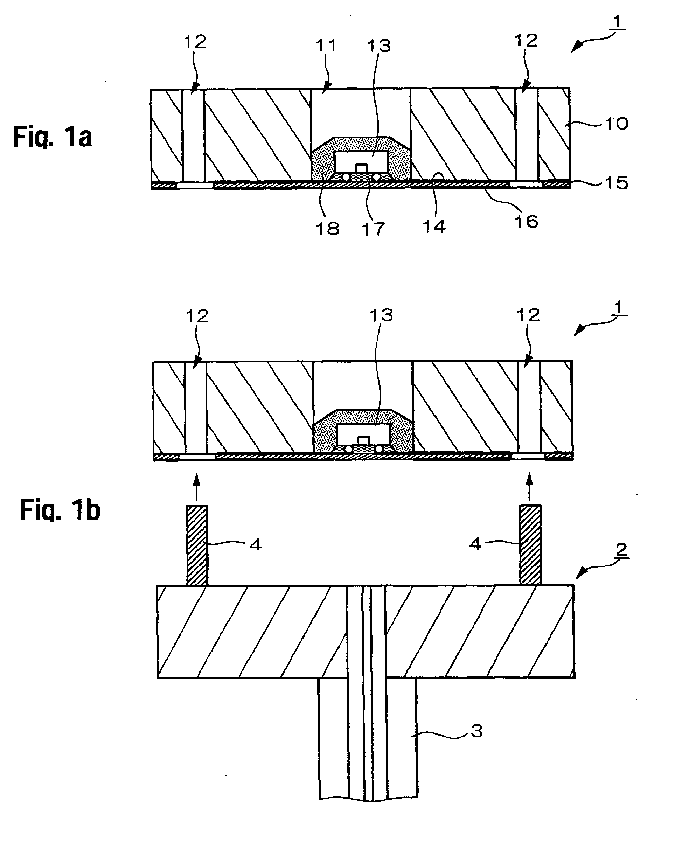

FIG. 1 shows, in sectional views, the structure of an optical module according to a first embodiment of the invention. As shown in FIG. 1 a, the optical module 1 comprises: a substrate 10, an optical element 13, a first wiring layer 14, a transparent layer 15, a second wiring layer 16, an underfill material 17, and a sealing material 18. As shown in FIG. 1 b, the optical module 1 is detachably coupled to a connector 2 provided at one end face of an optical fiber 3.

The substrate 10 accommodates the optical element 13 in a first hole 11 provided substantially in the center of the substrate 10. A second hole 12 is provided near each end of the substrate 10. The substrate 10 can be made of various materials, such as conductive materials like stainless steel, aluminum and copper or the like, and non-conductive materials like glass, resin and ceramics or the like. In the illustrated embodiment the substrate 10 is made of ceramics.

The first hole 11 is used to form a space for accommodating the optical element 13. As illustrated, the optical element 13 is supported by the transparent layer 15 while being arranged inside the first hole 11. Accordingly, the distance between the optical fiber 3 and the optical element 13 can be substantially shorter and independent of the thickness of the substrate 10. Hence, the thickness of the substrate may be determined with respect to mechanical strength and other factors. In the illustrated example, the first hole 11 penetrates from the one surface side of the substrate 10 to the other side surface, however, the hole is not necessarily such a through-hole, but may be just a recess. A through-hole is preferable, however, because it makes the manufacturing process easier as will be described later.

The second holes 12 are used for aligning the connector 2. The connector 2 is provided with corresponding alignment pins 4 as illustrated, and the optical module 1 and the connector 2 are attached to one another by inserting the alignment pins 4 into the second holes 12, respectively. Accordingly, the optical fiber 3 and the optical element 13 are aligned easily and with high precision. In addition, in the illustrated example, the second holes 12 are through-holes as well that penetrate from one surface side of the substrate 10 to the other surface side. Like the first hole 11, the second holes 12 need not necessarily be through-holes, but may be replaced by a recess or the like.

The optical element 13 sends light signals towards the optical fiber 3 through the transparent layer 15 or receives light signals from the optical fiber 3. For example, when the optical module 1 is used at an information transmission side, a light emitting element such as a VCSEL (Surface Emitting Laser) is used as the optical element 13. On the other hand, when the optical module 1 is used at an information receiving side, a light receiving element such as a photodiode or a photo transistor is used as the optical element 13.

The first wiring layer 14 serves to transmit electrical signals between the optical element 13 and an electronic component such as a circuit chip (not shown), and is arranged between the one surface side of the substrate 10 and the transparent layer 15. The first wiring layer 14 is formed in a predetermined shape (a wiring pattern) using a conductive material such as copper.

The transparent layer 15 is arranged on the one surface side of the substrate 10 so as to cover, at least, the entire first hole 11. According to the embodiment, the transparent layer 15 is formed nearly on the entire one surface side of the substrate 10 except for the region of the second holes 12 and covers the first wiring layer 14 also. The optical fiber 3 and the optical element 13 are optically coupled through the transparent layer 15. The transparent layer 15 can be formed using a resin layer (transparent resin layer) that allows light to pass therethrough such as polyimide and epoxy resin. A polyimide layer is suitably employed, because it has good transparent characteristics and flexibility and is easy to handle.

The second wiring layer 16 serves to transmit electrical signals between the optical element 13 and an electronic component such as a circuit chip (not shown), and is formed on the transparent layer 15 in a predetermined shape (a wiring pattern) using a conductive material such as copper.

In addition, in order to allow for a high-speed operation of the optical element 13, it is preferable to constitute a microstrip line, which is suitable for transmitting high frequency signals, using the first wiring layer 14, the transparent layer 15 and the second wiring layer 16. The details for this case will be described later.

The underfill material (adjustment material) 17 is interposed between the optical element 13 and the transparent layer 15, and serves to suppress reflection and scattering of signal light on the surface of the transparent layer 15, and to reduce optical loss. Accordingly, interfacial reflection is suppressed and the optical coupling efficiency is improved. As the underfill material 17, a material having a refractive index close to (more preferably, substantially equal to) that of the material that constitutes the transparent layer 15 is preferably used. As for the manufacturing process, it is preferable that for the underfill material 17 a material is used that is cured by a post-processing after having been filled in, such as a thermosetting or optically-curable epoxy resin.

The sealing material 18 is for protecting the optical element 13 and is applied so as to seal the entire optical element 13 inside the first hole 11 and on the transparent layer 15. It is preferable that, as the sealing material (potting material) 18, a material is used that is cured by post processing after having been filled in, such as a thermosetting or optically-curable epoxy resin. Moreover, it is also suitable that the sealing material 18 and the above-described underfill material 17 are the same materials. In that case, the adhesion between the underfill material 17 and the sealing material 18 is improved. Moreover, in this case, the underfill material 17 and the sealing material 18 can be simultaneously applied.

Next, a case where a microstrip line is formed of the first wiring layer 14, the transparent layer 15 and the second wiring layer 16 will be described in detail. When constituting the microstrip line in this way, its characteristic impedance can be set to a desired value based on the following formula. That is, the characteristic impedance $Z0$ ($\Omega$) of the microstrip line is determined by the following formula, when the line width of the transmission line (the first wiring layer 14) is expressed as B, the line thickness as C, the gap between the transmission line and the ground (the second wiring layer 16 for the ground potential) as H, and the relative dielectric constant of the dielectric layer (transparent layer 15) as $\varepsilon_r$.

$$Z0 = (87/ (\varepsilon_r+1.41 )^{\frac{1}{2}}) \times \ln (5.98H/ (0.8 B+C))$$

When the input/output impedance of the optical element 13 is 50 Ω, signal attenuation can be prevented by impedance matching by setting the characteristic impedance of the microstrip line to 50 Ω. For example, the characteristic impedance Z0 of the microstrip line can be set to about 50 Ω by using a polyimide layer with its relative-dielectric-constant $\varepsilon_r$ = 3.4 for the transparent layer 15, and by setting B = 0.09 mm, H = 0.05 mm, and C = 0.012 mm. The thickness of the transparent layer 15 becomes 0.05 mm. If the thickness is below this value, the conductor width becomes narrow and there may be a case where the DC resistance component is increased or the variance of the impedance value is increased due to the variance of the line width.

The manufacturing method of the optical module 1 according to the first embodiment having the structure explained above will be described next.

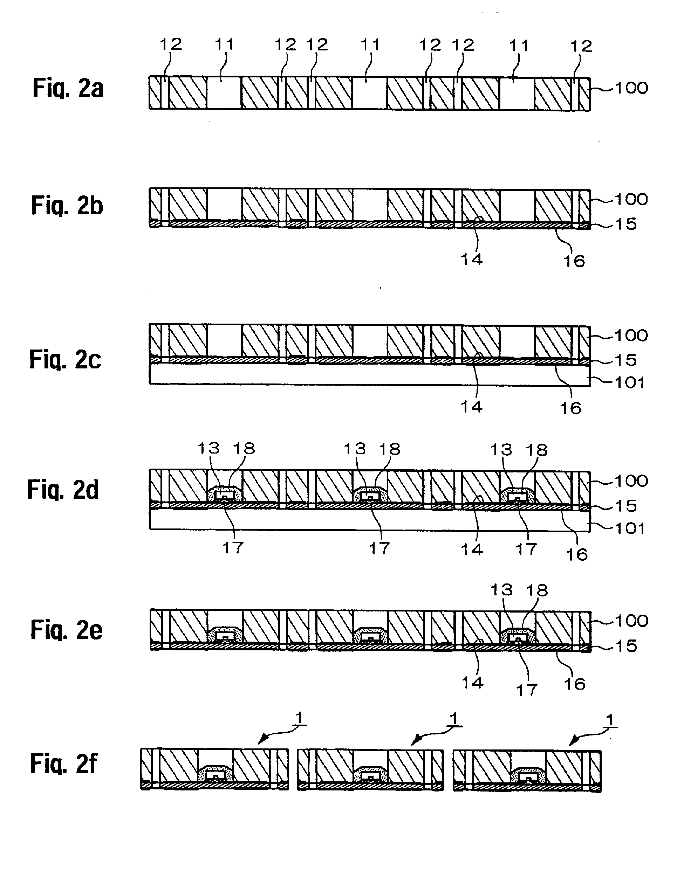

FIG. 2a to 2f are views for explaining the manufacturing method. According to the embodiment, a plurality of optical modules 1 are batch formed on one mother substrate, and the individual optical modules 1 are then obtained by dividing the substrate later. Details will be described hereinafter.

First, as shown in FIG. 2a, a mother substrate 100, which is to become a base material for the substrate 10 of the each optical module 1, is prepared. Then, corresponding to the formation regions of the respective optical modules 1, a plurality of first holes 11 and a plurality of second holes 12 are formed in the mother substrate 100.

Next, as shown in FIG. 2b, on one surface (bottom surface) of the mother substrate 100, the first wiring layer 14, the transparent layer 15, and the second wiring layer 16 are formed. It is preferable that this step be carried out by attaching a flexible printed circuit (FPC) board, which includes a plurality of wiring patterns corresponding to each of the plurality of optical modules 1, to one surface of the mother substrate 100. Moreover, it is preferable that the attachment of the FPC board be carried out by inserting a thermosetting adhesive sheet between the mother substrate 100 and the FPC board, and by subsequent thermo-compression bonding. In this case, a strong adhesive strength can be obtained from this simple process.

Moreover, as for this step, when using a FPC board, it is more preferable that the FPC board be attached to the mother substrate 100 by forming openings in advance in the regions corresponding to the respective second holes 12 and aligning the openings with the second holes 12. It is needless to say that these regions corresponding to the second holes 12 may be opened after the FPC board has been attached. Furthermore, as for the FPC board of the embodiment, one including a microstrip line, wherein the first wiring layer 14 is arranged on one surface side of a dielectric layer and the second wiring layer 16 is arranged on another surface side, is used. As for the first wiring layer 14 and the second wiring layer 16 included in the FPC board, for example, one with a thickness of around 12 μm, which is made of copper with a thickness of 10 μm and subsequently electroformed with nickel (Ni), gold (Au) or the like, is suitable.

Before forming the transparent layer 15 or the first layer 14, it may be suitable to carry out a planarization processing of one surface side of the mother substrate 100. Moreover, the first wiring layer 14, the transparent layer 15, and the second wiring layer 16 may be formed separately. In this case, it is effective to form the first wiring layer 14 on the mother board at first, and then form the transparent layer 15 thereon, and further form the second wiring layer 16 on the transparent layer 15 using a method such as sputtering or copper foil attaching. In this case, the transparent layer 15 can be formed by attaching a layer such as a polyimide layer as the transparent layer.

Next, as shown in FIG. 2c, on the other surface side (the side where the second wiring layer 16 is arranged) of the transparent layer 15, a dummy substrate 101 is arranged as a jig. At least one surface side of the dummy substrate 101 is substantially flat, and the dummy substrate 101 serves to support the transparent layer 15 from the back surface side when mounting the optical element 13 in the next step, and can be made of any material, but a material such as metal or glass is suitably used. In the embodiment, a substrate of SUS (stainless steel) is used as the dummy substrate 101. Further preferably, the dummy substrate 101 is fixed to the mother substrate 100 by a method of screwing or the like. In addition, in this step, at least the other surface side of the transparent layer 15 should be supported by a flat surface, and the dummy substrate 101 does not necessarily need to be used. However, the optical element 13 is mounted more easily by using the dummy substrate 101.

Next, as shown in FIG. 2d, each optical element 13 is inserted inside a respective first hole 11, and mounted on the transparent layer 15 so that the light emitting surface of the optical elements 13 are directed toward the transparent layer side. In this step, the optical elements 13 are bonded to the first wiring layer 14 by flip-chip bonding, for example. Because the first holes 11 are made as through-holes, the optical elements 13 can be easily mounted from the open side of the respective holes, which is not covered with the transparent layer 15. Moreover, because the transparent layer 15 is supported at the bottom side by the above-described dummy substrate 101, the optical elements 13 can be mounted securely on the transparent layer 15 while avoiding deformation or damage of the transparent layer 15 when the optical elements 13 are mounted. In this step, each of the second holes 12 is used as an alignment mark, for example, and the optical elements 13 are mounted by being aligned with these holes as reference.

As shown in FIG. 2d, after the optical element 13 has been mounted, the underfill material 17 is filled between the optical elements 13 and the transparent layers 15 to reduce optical loss. This step is carried out by injecting the underfill material 17, which consists of a transparent epoxy resin, between the optical elements 13 (more specifically, the light emitting surface of the optical elements 13) and the transparent layer 15, and by subsequent thermosetting.

Next, as shown in FIG. 2d, the sealing material 18 is filled into the first holes 11 and on the transparent layer 15 so as to seal the entire optical elements 13. As for the sealing material 18, for example, a thermosetting epoxy resin can be used. The sealing material 18 and the above-described underfill material 17 may be made of a same material, and the manufacturing process will be simplified in such a case.

Next, as shown in FIG. 2e, the dummy substrate 101 is removed from the mother substrate 100. Then, as shown in FIG. 2f, the mother substrate 100 and the like (the layers thereon) are divided into predetermined regions corresponding to the individual optical modules 1, and thus the plurality of optical modules 1 are obtained. The division in this step can be carried out by a method of dicing, laser cutting or the like.

Accordingly, because the optical module 1 according to this embodiment has a structure where the optical element 13 is arranged in the space provided by the first hole 11 and is supported by the transparent layer 15 that is arranged so as to cover the first hole 11, the distance between the optical element 13 and the optical fiber 3 does not depend on the thickness of the substrate 10. Accordingly, the optical coupling efficiency can be increased and is independent of the thickness of the substrate 10. Moreover, because the transparent layer 15 is interposed between the optical element 13 and the optical fiber 3, any influence of open air, humidity or the like from the optical fiber side is prevented, and the degree of protection of the light emitting surface or the light receiving surface of the optical element 13 can be increased easily. Moreover, because most of the assembly steps of the optical module 1 can be batch processed on one substrate (the mother substrate 100), an inexpensive optical module with a good yield can be mass-produced.

The optical module 1 according to this first embodiment is suitably used for an optical-communication apparatus (an optical transceiver). The optical-communication apparatus according to the present invention can be used for a personal computer, PDA (personal digital assistant apparatus), an electronic notebook, and various other kinds of electronic apparatus.

**Second embodiment**

In the above-described first embodiment, an optical module, which does not include a drive circuit or the like for driving the optical element 13, has been described as an example, however, the optical module can be constituted to include such drive circuit or the like.

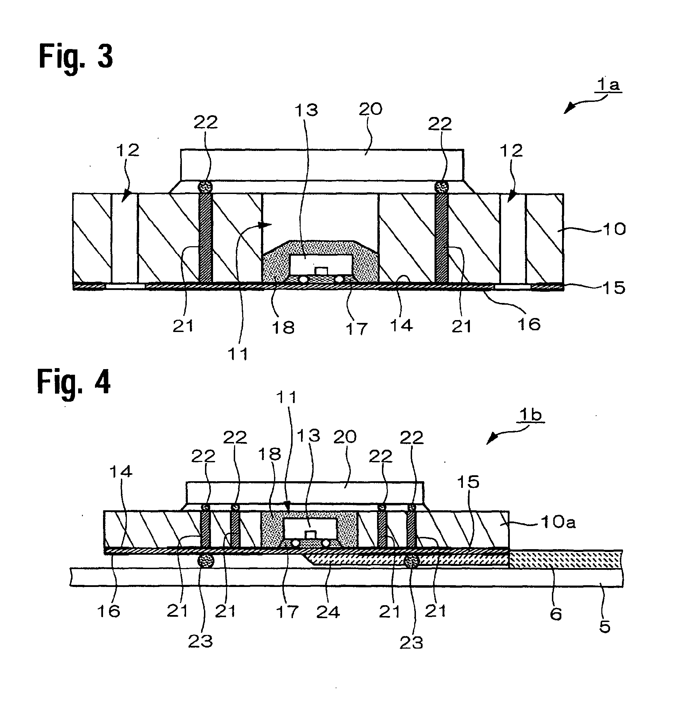

FIG. 3 illustrates the structure of an optical module according to a second embodiment. The basic structure of the optical module 1a a shown in FIG. 3 is the same as that of the optical module 1 of the first embodiment. Different from the first embodiment, the optical module 1a includes a circuit chip 20, which constitutes an electric circuit together with the optical element 13. For example, the circuit chip 20 may be a driver, which drives a light emitting element as the optical element, or an amplifier, which amplifies the output current of a light receiving element as the optical element. In addition, although not illustrated, the optical module 1a a may include passive elements such as a resistor and a capacitor, and various kinds of electronic component other than the circuit chip 20. Furthermore, a circuit pattern may be formed also on the other surface side (the side where the circuit chip 20 is arranged) of the substrate 10 by using a conduction layer.

The above-described circuit chip 20 is arranged on the top surface side (the other surface side) of the substrate, and is electrically coupled to the first wiring layer 14 through conductors (plugs) 21 that are formed so as to penetrate the substrate 10. More preferably, the circuit chip 20 is arranged above the optical element 13 so as to cover the first hole 11, where the optical element 13 is arranged as illustrated. By carrying out such three-dimensional packaging, the packaging area can be reduced and further miniaturization of the optical module 1 can be attained. Furthermore, according to the embodiment, a bump 22 consisting of a solder ball is arranged between the circuit chip 20 and each conductor 21. By using the bump 22, mounting of the circuit chip 20 becomes easy.

Next, a method of manufacturing the optical module 1a according to the second embodiment will be described. This method is basically the same as that of manufacturing the first embodiment (refer to FIG. 2). Hereinafter, the difference will mainly be described.

First, in the step of forming the first hole 11 and the second holes 12 (refer to FIG. 2a), third holes (through-holes) for embedding the conductors 21 are formed as well.

After the step of forming the first wiring layer 14, the transparent layer 15 and the second conduction layer 16 (refer to FIG. 2b), the conductors 21 are formed inside the third holes. The conductors 21 can be formed, for example, by pouring solder at a high temperature into the third holes. After the conductors 21 have been formed, a circuit pattern is formed on the other surface side (the side where the circuit chip 20 is arranged) of the mother board, as required.

After the optical element 13 (refer to FIG. 2d) has been mounted, the circuit chip 20, having the bumps 22 formed thereon, is aligned with the conductors 21 and mounted. The mounting is carried out by flip-chip bonding, for example.

By adding the above-described steps to the manufacturing method according to the first embodiment, the optical module 1a according to the second embodiment can be manufactured. The optical module 1a according to the second embodiment, formed by this way, has the same operational effect as the optical module 1 according to the first embodiment. Furthermore, because the optical module 1a includes electronic components such as the circuit chip 20, an external drive circuit or the like can be omitted or simplified, and thus the optical module 1a is handled conveniently. Because the wire length between the circuit chip 20 and the optical element 13 is shortened, an effect that easily avoids problems such as signal delay or noise interference can be also expected. The optical module 1a according to the second embodiment can be also used for an optical transceiver or various kinds of electronic apparatus.

**Third embodiment**

FIG. 4 illustrates the structure of an optical module according to a third embodiment. An optical module 1b according to this third embodiment is not detachable from a connector supporting the optical fiber as described in each of the above embodiments, but is one that is used as being mounted on a circuit board 5 (an opto/electric hybrid substrate) including an optical waveguide 6, as illustrated.

The structure of the optical module 1b shown in FIG. 4 is basically the same as that of the optical module 1a according to the second embodiment, however, the optical module 1b differs in that the second holes used for the alignment of the connector are omitted and that an optical waveguide 24 is added. Like reference numerals are given to like components, and their repeated description will be omitted.

The optical waveguide 24 is coupled to the optical waveguide 6 provided on the circuit board 5, and transmits the light signal radiated from the optical element 13 or the light signal sent from the outside. At the coupling point of the optical waveguide 24 and the optical waveguide 6 on the circuit board 5 side, a matching oil or the like, which properly reduces the optical loss, is used. The optical waveguide 24 is arranged such that the extension direction thereof is substantially in parallel with one surface side of a substrate 10a. A reflective mirror is formed at the end of the optical waveguide 24, and the course or path of a light signal radiated from the optical element 13 is changed by substantially 90 degrees by the reflective mirror, and thus the light signal proceeds through the optical waveguide 24. Moreover, the course of a light signal sent through the optical waveguide 24 is changed by substantially 90 degrees by the reflective mirror, and the light signal is incident on the optical element 13.

The circuit board 5 includes the optical waveguide 6, which serves to transmit light signals, and further includes a circuit chip and a wiring layer or the like (not shown) to transmit electrical signals, as required. Electrical coupling between the circuit board 5 and the optical module 1b is attained by a bump 23. The optical module 1b according to this embodiment, and the circuit board 5, having the optical module 1b mounted thereon, can be applied to various kinds of electronic apparatus such as a personal computer, and can be used for information communication between boards or between chips in an apparatus, and information communication to/from an external apparatus or the like.

In addition, the manufacturing process of the optical module 1b is essentially the same as that of the optical module 1a according to the second embodiment, and thus only a step of forming the optical waveguide 24 on the other surface of the transparent layer 15 needs to be added. Moreover, the optical waveguide 24 can be included on the circuit board side, rather than the optical module side.

As described above, various embodiments of the optical module according to the present invention have been described, however, the scope of the present invention is not limited to the above-described embodiments, but various modifications are possible within the scope of the appended claims. For example, in each of the above-described embodiments, the optical module can be used for parallel transmission by using one including a plurality of light sources (for example, a VCSEL array) or one including a plurality of light receiving elements (for example, a photodiode array) as the optical element, and by using a multi-channel (a multi-core) tape fiber as the optical fiber.

**Claims**

1. An optical module, comprising:

   a substrate (10) having a hole (11);
   a transparent layer (15), arranged on one surface side of the substrate (10) so as to cover the hole (11); and
   an optical element (13) arranged inside the hole on the transparent layer (15) so as to allow the optical element (13) to transmit or receive light signals through the transparent layer (15).

2. The optical module according to claim 1 adapted to have a connector (2) provided at one end face of an optical fiber (3) detachably coupled to the optical module at said one surface side so as to allow light signals transmitted or received through the transparent layer (15) to pass through said optical fiber (3).

3. The optical module according to claim 2, wherein the first hole (11) is formed so as to penetrate the substrate (10).

4. The optical module according to claim 2 or claim 3, wherein the substrate (10) further comprises one or more second holes for alignment of the connector (2).

5. The optical module according to any one of claims 2 through 4 further comprising an adjustment material (17) that is interposed between the transparent layer (15) and the optical element (13) to suppress scattering of said light signals.

6. The optical module according to any one of claims 2 through 5 further comprising a sealing material (18) for sealing the optical element (13).

7. The optical module according to claims 5 and 6, wherein the sealing material (18) and the adjustment material (17) are made of a same material.

8. The optical module according to any one of claims 2 through 7, wherein the transparent layer (15) is a transparent flexible printed circuit board having a wiring layer (14, 16) at least on one surface side.

9. The optical module according to claim 8, wherein the flexible printed circuit board includes a microstrip line.

10. The optical module according to claim 8 or claim 9 further comprising an electronic component (20) that is arranged on the other surface side of the substrate (10) and constitutes an electric circuit together with the optical element (13).

11. The optical module according to claim 10, wherein the electronic component (20) is electrically coupled to the wiring layer (14, 16) of the flexible printed circuit board through a conductor (21) that is arranged in and penetrates the substrate (10).

12. The optical module according to claim 10 or claim 11, wherein the electronic component (20) is arranged above the optical element (13).

13. The optical module according to claim 1, further comprising:

an optical waveguide (24) arranged on said one surface side of the substrate (10a) so as to allow light signals transmitted or received through the transparent layer (15) to pass through the optical waveguide (24).

14. The optical module according to claim 13, wherein the optical waveguide (24) is arranged such that the extension direction of the optical waveguide is approximately in parallel to one surface side of the substrate (10a).

15. The optical module according to claim 13 or claim 14, wherein the transparent layer (15) is constituted of a flexible transparent printed circuit board having a wiring layer (14, 16) at least on one surface side, and the optical module further includes a bump (22), which is arranged on the other surface side of the substrate (10a) of the FPC board and for electrical coupling to the outside.

16. An optical communication apparatus, comprising the optical module according to any one of claims 2 through 15.

17. An electronic apparatus, comprising the optical module according to any one of claims 2 through 15.

18. A method of manufacturing an optical module as defined in claim 1, comprising:

a) forming a first hole (11) in a substrate (100);
b) forming a transparent layer (15) on one surface side of the substrate (109) so as to cover the hole (11); and
c) forming an optical element (13) inside the hole and on the transparent layer (15).

19. The method of claim 18, wherein

step a) comprises forming a plurality of first holes (11) in the substrate (100);
step b) comprises forming said transparent layer (15) on said one surface side of the substrate so as to cover each of the first holes (11); and
step (c) comprises forming an optical element (13) inside each of the first holes (11);
the method further comprising
d) dividing the substrate into a plurality of predetermined regions each region including one of said first holes (11).

20. The method according to claim 19, further comprising:

e) forming a wiring layer (14, 16) for transmission of signals to each of the optical elements (13) at least on one surface side of the transparent layer (15).

21. The method according to claim 20, wherein steps b) and e) are carried out simultaneously by attaching an FPC board comprising the transparent layer (15) and the wiring layer (14, 16) to said one surface side of the substrate (100).

22. The method according to any one of claims 19 through 21, further comprising: providing an adjustment material (17) between the transparent layer (15) and the optical element (13) to suppress scattering of said light signals.

23. The method according to any one of claims 19 through 22, further comprising: providing a sealing material (18) so as to cover each of the optical elements (13).

24. The method according to any one of claims 19 through 23, further comprising: forming, associated with each first hole (11), at least one second hole (12) for the alignment of a connector (2) provided at one end face of an optical fiber (3) when the connector is attached to said one surface side of the substrate.

25. The method according to any one of claims 19 through 24, further comprising: forming, associated with each optical element (13), an electronic component (20) on the other surface side of the substrate, which electronic component constitutes an electric circuit together with the respective optical element (13).

Fig. 1a

Fig. 1b

**Fig. 2a**

**Fig. 2b**

**Fig. 2c**

**Fig. 2d**

**Fig. 2e**

**Fig. 2f**

## Fig. 3

_1a_

## Fig. 4

_1b_

## EUROPEAN SEARCH REPORT

**European Patent Office**

Application Number

EP 04 01 0169

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 01/01497 A (HONEYWELL INC) 4 January 2001 (2001-01-04) | 1-4,16, 17 | G02B6/42 |
| Y | * page 5; figures 1,4 * | 5-7,13, 14,20-25 | |
| X | US 4 217 598 A (D AURIA LUIGI ET AL) 12 August 1980 (1980-08-12) * column 2, line 1 - line 4; figure 4 * | 1,13,18 | |
| X | WO 02/31565 A (COMMISSARIAT ENERGIE ATOMIQUE ; JALAGUIER ERIC (FR); MARION FRANCOIS () 18 April 2002 (2002-04-18) * figures 2,3A-3D * | 1,18,19 | |
| Y,D | US 2002/118924 A1 (MURATA AKIHIRO) 29 August 2002 (2002-08-29) * figures 1-5 * | 5-7,13, 14,20-25 | |
| Y | WO 98/29772 A (HONEYWELL INC) 9 July 1998 (1998-07-09) * figures 1,3 * | 13,14 | |

TECHNICAL FIELDS SEARCHED (Int.Cl.7)

G02B

The present search report has been drawn up for all claims

| Place of search | Date of completion of the search | Examiner |
|---|---|---|
| Munich | 2 July 2004 | Beutter, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 477 832 A1**

## ANNEX TO THE EUROPEAN SEARCH REPORT
## ON EUROPEAN PATENT APPLICATION NO.

EP 04 01 0169

This annex lists the patent family members relating to the patent documents cited in the above-mentioned European search report.
The members are as contained in the European Patent Office EDP file on
The European Patent Office is in no way liable for these particulars which are merely given for the purpose of information.

02-07-2004

| Patent document cited in search report | | Publication date | Patent family member(s) | | Publication date |
|---|---|---|---|---|---|
| WO 0101497 | A | 04-01-2001 | AU | 6339900 A | 31-01-2001 |
| | | | CA | 2378211 A1 | 04-01-2001 |
| | | | EP | 1192669 A1 | 03-04-2002 |
| | | | JP | 2003503858 T | 28-01-2003 |
| | | | WO | 0101497 A1 | 04-01-2001 |
| US 4217598 | A | 12-08-1980 | FR | 2387519 A1 | 10-11-1978 |
| | | | CA | 1103766 A1 | 23-06-1981 |
| | | | DE | 2816312 A1 | 19-10-1978 |
| | | | DE | 2858706 C2 | 16-03-1989 |
| | | | GB | 1594567 A | 30-07-1981 |
| | | | JP | 1389680 C | 23-07-1987 |
| | | | JP | 53129592 A | 11-11-1978 |
| | | | JP | 61057717 B | 08-12-1986 |
| WO 0231565 | A | 18-04-2002 | FR | 2815140 A1 | 12-04-2002 |
| | | | EP | 1332393 A1 | 06-08-2003 |
| | | | WO | 0231565 A1 | 18-04-2002 |
| | | | US | 2004037507 A1 | 26-02-2004 |
| US 2002118924 | A1 | 29-08-2002 | JP | 2002250846 A | 06-09-2002 |
| WO 9829772 | A | 09-07-1998 | CA | 2272751 A1 | 09-07-1998 |
| | | | DE | 69710098 D1 | 14-03-2002 |
| | | | DE | 69710098 T2 | 29-08-2002 |
| | | | EP | 0950204 A1 | 20-10-1999 |
| | | | JP | 2001507814 T | 12-06-2001 |
| | | | WO | 9829772 A1 | 09-07-1998 |
| | | | US | 6069991 A | 30-05-2000 |
| | | | US | 6088498 A | 11-07-2000 |
| | | | US | 2002181882 A1 | 05-12-2002 |
| | | | US | 6404960 B1 | 11-06-2002 |

For more details about this annex : see Official Journal of the European Patent Office, No. 12/82

14